# EUROPEAN PATENT APPLICATION

(11) **EP 4 576 499 A1**
(43) Date of publication of application: **25.06.2025**
(21) Application number: 23218592.6
(22) Date of filing: 20.12.2023
(51) Int. Cl.: H02K 1/20, H02K 3/50, H02K 9/19

(54) **A STATOR ASSEMBLY, A COOLANT FLUID DISTRIBUTION RING ELEMENT, A METHOD, AN ELECTRIC MACHINE AND A VEHICLE**

(71) Applicant: VOLVO TRUCK CORPORATION, 405 08 Göteborg (SE)
(72) Inventor: HUANG, Zhe, 413 11 Göteborg (SE); ANDERSSON, Rasmus, 422 49 Hisings Backa (SE); ALM, Ivar, 475 31 Öckerö (SE); LORD, John, 424 72 Olofstorp (SE); HAGSTEDT, Dan, 416 69 Göteborg (SE)
(74) Representative: Kransell & Wennborg KB

(57) **Abstract**

A stator assembly (1) for an electric machine (100), the stator assembly (1) comprises a stator (2) which extends between two end portions (21, 22) along a center axis (A) of the stator assembly (1), corresponding to a rotational axis of the electric machine (100), the stator (2) comprising:
- a plurality of coolant fluid channels (23) integrated in the stator (2), distributed in a circumferential direction around the stator (2) and extending between the two end portions (21, 22) with openings (231) at each end portion (21, 22), the stator assembly (1) further comprising:
- a first coolant fluid distribution ring element (4) provided at one of the end portions (21). An electric machine (100) and a vehicle (200) are also disclosed.

## Description

### TECHNICAL FIELD

The disclosure relates generally to electric machines. In particular aspects, the disclosure relates to a stator assembly, a coolant fluid distribution ring element, a method for manufacturing a coolant fluid distribution ring element, an electric machine, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric machines, including electric motors and generators, are used in many applications. For example, it has become more common to use electric machines in vehicles for generating propulsion power.

An electric machine typically comprises a stator and a rotor. It may be necessary to cool the electric machine during use. To this end, it is known to use coolant fluid for cooling the electric machine during use. However, there is still a strive to develop improved technology relating to cooling of electric machines.

### SUMMARY

According to a first aspect of the disclosure, there is provided a stator assembly for an electric machine. The stator assembly comprises a stator which extends between two end portions along a center axis of the stator assembly, corresponding to a rotational axis of the electric machine, the stator comprising:
- a plurality of coolant fluid channels integrated in the stator, distributed in a circumferential direction around the stator and extending between the two end portions with openings at each end portion, the stator assembly further comprising:
- a first coolant fluid distribution ring element provided at one of the end portions, wherein the first coolant fluid distribution ring element comprises a first set of cavities distributed in a circumferential direction around the first coolant fluid distribution ring element, wherein each cavity of the first set of cavities is fluidly connected to a respective coolant fluid channel of a first set of the plurality of coolant fluid channels, wherein the first coolant fluid distribution ring element further comprises a first set of through holes distributed in the circumferential direction around the first coolant fluid distribution ring element and extending therethrough in a direction along the center axis, wherein each through hole of the first set of through holes is fluidly connected to a respective coolant fluid channel of a second set of the plurality of coolant fluid channels, and wherein the first coolant fluid distribution ring element further comprises a first ring element fluid channel which extends in the circumferential direction around the first coolant fluid distribution ring element, wherein the first ring element fluid channel is fluidly connected to each cavity of the first set of cavities and fluidly separated from each through hole of the first set of through holes. The first aspect of the disclosure may seek to improve cooling of the stator. A technical benefit may include that coolant fluid is allowed to flow in the stator in different directions along the center axis in an efficient manner, thereby improving the cooling effect of the stator. This in turn implies improved performance of the stator and the electric machine, such as increased power and/or torque output.

The stator may form a hollow space along the center axis in which a rotor of the electric machine is intended to be provided. Alternatively, the stator may be configured to be provided radially inside a rotor, i.e., the rotor may form a hollow space along the center axis in which the stator is intended to be provided.

Optionally in some examples, including in at least one preferred example, the stator comprises a plurality of stator teeth, distributed in a circumferential direction around the stator and protruding in a radial direction towards or away from the center axis, wherein at least one coolant fluid channel of the plurality of coolant fluid channels is at least partly located in a stator tooth of the plurality of stator teeth. A technical benefit may include improved cooling of the stator, resulting in improved performance of the stator and the electric machine, such as increased power and/or torque output. For example, a coolant fluid channel at least partly located in a stator tooth may result in that the coolant fluid channel is provided closer to a stator winding, thereby more efficiently controlling the temperature of the stator winding.

Optionally in some examples, including in at least one preferred example, the first coolant fluid distribution ring element comprises a plurality of tooth portions distributed in a circumferential direction around the first coolant fluid distribution ring element and protruding in a radial direction towards or away from the center axis. A technical benefit may include that the first coolant fluid distribution ring element is better adapted to the shape of the stator. This in turn may result in improved cooling and/or a more space efficient configuration.

Optionally in some examples, including in at least one preferred example, at least one cavity of the first set of cavities and/or at least one through hole of the first set of through holes are/is at least partly located in a tooth portion of the plurality of tooth portions. A technical benefit may include improved cooling of the stator, and/or a smooth intersection between the at least one cavity/through hole and a coolant fluid channel of the stator which is located in a stator tooth.

Optionally in some examples, including in at least one preferred example, at least one tooth portion of the plurality of tooth portions has a curved profile, as seen in a sectional plane of the tooth portion which is perpendicular to a radial direction of the tooth portion. A technical benefit may include an improved shape of the first coolant fluid distribution ring element which is better adapted to the shape of other elements of the stator assembly.

Optionally in some examples, including in at least one preferred example, the stator assembly comprises at least one hairpin winding provided proximate the curved profile such that it follows the curved profile, as seen in the sectional plane of the tooth portion which is perpendicular to the radial direction of the tooth portion. A technical benefit may include that the shape of the first coolant fluid distribution ring element is better adapted to the shape of the hairpin winding of the stator assembly.

Optionally in some examples, including in at least one preferred example, every second coolant fluid channel of the plurality of coolant fluid channels is a coolant fluid channel of the first set of the plurality of coolant fluid channels and every other coolant fluid channel of the plurality of coolant fluid channels is a coolant fluid channel of the second set of the plurality of coolant fluid channels. A technical benefit may include improved cooling of the stator, allowing coolant fluid to be directed in one direction in every second coolant fluid channel and in an opposite direction in every other coolant fluid channel. In other examples, the first set of the plurality of coolant fluid channels and the second set of the plurality of coolant fluid channels are distributed in the circumferential direction in a repeated pattern, such as two coolant fluid channels of the first set of the plurality of coolant fluid channels followed by two coolant fluid channels of the second set of the plurality of coolant fluid channels, and so on, or in any other repeated pattern. In yet further examples, the first set of the plurality of coolant fluid channels and the second set of the plurality of coolant fluid channels are distributed in the circumferential direction in any random manner. The configuration may be altered depending on different needs and circumstances.

Optionally in some examples, including in at least one preferred example, at least one cavity of the first set of cavities has a maximum radial extension in a radial direction from the first ring element fluid channel towards or away from the center axis and a maximum tangential extension in a tangential direction, wherein the maximum radial extension in the radial direction is longer than the maximum tangential extension in the tangential direction. A technical benefit may include an improved fluid connection between the first ring element fluid channel and the at least one cavity. For example, the maximum radial extension and the maximum tangential extension may be configured to form an oblong profile, as seen in a sectional plane which is perpendicular to the center axis.

Optionally in some examples, including in at least one preferred example, at least one coolant fluid channel of the plurality of coolant fluid channels has a maximum radial extension in a radial direction and a maximum tangential extension in a tangential direction, wherein the maximum radial extension in the radial direction is longer than the maximum tangential extension in the tangential direction. A technical benefit may include that more coolant fluid can be provided inside the stator, such as in the stator tooth, in an efficient manner, resulting in improved cooling of the stator. For example, the maximum radial extension and the maximum tangential extension may be configured to form an oblong profile, as seen in a sectional plane which is perpendicular to the center axis.

Optionally in some examples, including in at least one preferred example, at least one through hole of the first set of through holes, on a first axial side of the first coolant fluid distribution ring element which is facing the stator, has a maximum radial extension in a radial direction and a maximum tangential extension in a tangential direction, wherein the maximum radial extension in the radial direction is longer than the maximum tangential extension in the tangential direction. A technical benefit may include an improved connection to a coolant fluid channel of the stator and/or a smooth intersection between the at least one through hole and a coolant fluid channel of the stator. For example, the maximum radial extension and the maximum tangential extension may be configured to form an oblong profile, as seen in a sectional plane which is perpendicular to the center axis.

Optionally in some examples, including in at least one preferred example, the at least one through hole of the first set of through holes, on a second axial side of the first coolant fluid distribution ring element which is facing away from the stator, has an opening with an area size which is smaller than an area size of the at least one through hole on the first axial side. A technical benefit may include that an improved nozzle effect is achieved, e.g., allowing coolant flow to accelerate when passing the at least one through hole.

Optionally in some examples, including in at least one preferred example, the opening on the second axial side of the at least one through hole is circular. A technical benefit may include that a favorable shape of the coolant flow leaving the at least one through hole is achieved. For example, a substantially laminar flow may thereby be achieved. A technical benefit may additionally or alternatively include that the shape of the opening is beneficial for manufacturing, i.e., a cost-effective configuration. In other examples, the opening on the second axial side of the at least one through hole is oval, square-shaped, or any other suitable shape for generating a specific behavior and/or direction of the coolant flow leaving the at least one through hole.

Optionally in some examples, including in at least one preferred example, the first ring element fluid channel is fluidly separated from each through hole of the first set of through holes by a cylindrically shaped wall and/or a radially extending disc-shaped wall of the first coolant fluid distribution ring element. A technical benefit may include a cost-effective configuration which is easy to manufacture. In some examples, the cylindrically shaped wall and/or the radially extending disc-shaped wall may form an L-shaped profile, or a conically shaped profile, as seen in a sectional plane which is extending along the center axis and a radial direction of the first coolant fluid distribution ring element. In yet further examples, the first ring element fluid channel is fluidly separated from each through hole of the first set of through holes by an axially extending wall and/or a radially extending wall of the first coolant fluid distribution ring element.

Optionally in some examples, including in at least one preferred example, the first ring element fluid channel is provided at a radially outwardly facing portion of the first coolant fluid distribution ring element or at a radially inwardly facing portion of the first coolant fluid distribution ring element. A technical benefit may include a cost-effective configuration which is easy to manufacture. Additionally, or alternatively, a technical benefit may include a more favorable position of the first ring element fluid channel, e.g., more easily allowing coolant fluid to enter the first ring element fluid channel.

Optionally in some examples, including in at least one preferred example, the first coolant fluid distribution ring element is made of a polymer material or a non-magnetic metallic material. A technical benefit may include a cost-effective material which is not negatively influencing the performance of the stator or the electric machine.

Optionally in some examples, including in at least one preferred example, the stator assembly further comprises:
- a second coolant fluid distribution ring element provided at the other one of the end portions, wherein the second coolant fluid distribution ring element comprises a second set of cavities distributed in a circumferential direction around the second coolant fluid distribution ring element, wherein each cavity of the second set of cavities is fluidly connected to a respective coolant fluid channel of the second set of the plurality of coolant fluid channels, wherein the second coolant fluid distribution ring element further comprises a second set of through holes distributed in the circumferential direction around the second coolant fluid distribution ring element and extending therethrough in a direction along the center axis, wherein each through hole of the second set of through holes is fluidly connected to a respective coolant fluid channel of the first set of the plurality of coolant fluid channels, and wherein the second coolant fluid distribution ring element further comprises a second ring element fluid channel which extends in the circumferential direction around the second coolant fluid distribution ring element, wherein the second ring element fluid channel is fluidly connected to each cavity of the second set of cavities and fluidly separated from each through hole of the second set of through holes. A technical benefit may include that coolant fluid is allowed to flow in the stator in different directions along the center axis in an efficient manner by use of the first and second coolant fluid distribution ring element, thereby improving the cooling effect of the stator. A technical benefit may also include that coolant fluid may be provided to each one of the first and second ring element fluid channel, i.e. at each end portion of the stator. A technical benefit may also include that coolant fluid may be allowed to exit through the first and second set of through holes at each end portion of the stator.

According to a second aspect of the disclosure, there is provided a coolant fluid distribution ring element for a stator of an electric machine. The coolant fluid distribution ring element comprises a first set of cavities distributed in a circumferential direction around the first coolant fluid distribution ring element, wherein each cavity of the first set of cavities is arranged to be fluidly connected to a respective coolant fluid channel of a first set of a plurality of coolant fluid channels of the stator, wherein the first coolant fluid distribution ring element further comprises a first set of through holes distributed in the circumferential direction around the first coolant fluid distribution ring element and extending therethrough in a direction along a center axis thereof, wherein each through hole of the first set of through holes is arranged to be fluidly connected to a respective coolant fluid channel of a second set of the plurality of coolant fluid channels of the stator, and wherein the first coolant fluid distribution ring element further comprises a first ring element fluid channel which extends in the circumferential direction around the first coolant fluid distribution ring element, wherein the first ring element fluid channel is fluidly connected to each cavity of the first set of cavities and fluidly separated from each through hole of the first set of through holes. The second aspect of the disclosure may seek to improve cooling of a stator. A technical benefit may include that coolant fluid is allowed to flow in the stator in different directions along the center axis in an efficient manner, thereby improving the cooling effect of the stator. This in turn implies improved performance of the stator and the electric machine, such as increased power and/or torque output.

According to a third aspect of the disclosure, there is provided a method for manufacturing a coolant fluid distribution ring element for a stator according to any one of the examples of the first and second aspects of the disclosure. The method comprises:
- injection molding the coolant fluid distribution ring element. The third aspect of the disclosure may seek to facilitate manufacturing of the coolant fluid distribution ring element. Even though injection molding has been found to be a cost-effective way of manufacturing the coolant fluid distribution ring element it shall be noted that it may also be manufactured using other techniques, such as 3d-printing, cutting, drilling, casting, etc.

According to a fourth aspect of the disclosure, there is provided an electric machine comprising a stator assembly according to any one of the examples disclosed herein and a rotor which is arranged to rotate about the center axis. Advantages and effects of the fourth aspect of the disclosure are analogous to the advantages and effects of the first and second aspects of the disclosure, and vice versa.

According to a fifth aspect of the disclosure, there is provided a vehicle comprising a stator assembly according to any one of the examples disclosed herein, a coolant fluid distribution ring element according to any one of the examples disclosed herein, and/or an electric machine according to any one of the examples disclosed herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2** is an exemplary stator assembly and electric machine in a sectional view according to an example.
**FIG. 3** is the stator assembly and electric machine of FIG. 2 in an enlarged sectional view.
**FIG. 4** is the stator assembly and electric machine of FIG. 2 in an enlarged sectional view.
**FIG. 5** is an exemplary stator in a sectional view according to an example.
**FIGS. 6a****-d** are an exemplary coolant fluid distribution ring element in perspective views according to an example.
**FIG. 7** is an exemplary tooth portion in a schematic view according to an example.
**FIG. 8** is an exemplary flowchart of a method according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide improved cooling for a stator of an electric machine. In addition, an aim of the present disclosure is to provide a stator assembly, a coolant fluid distribution ring element, a method for manufacturing a coolant fluid distribution ring element, an electric machine, and/or a vehicle, which at least partially alleviates one or more drawbacks of the prior art, or which at least is a suitable alternative.

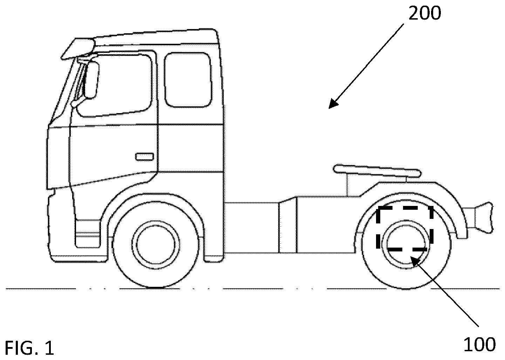

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises an electric machine 100 according to examples disclosed herein. In this example, the electric machine 100 is used for propulsion of the vehicle 200, i.e., it is part of a drive train of the vehicle 200. Accordingly, the vehicle 200 is an electric vehicle or a hybrid vehicle. Even though the electric machine 100 can be implemented in a vehicle it shall be noted that the electric machine 100 as disclosed herein may also be used in any other application, including stationary machinery.

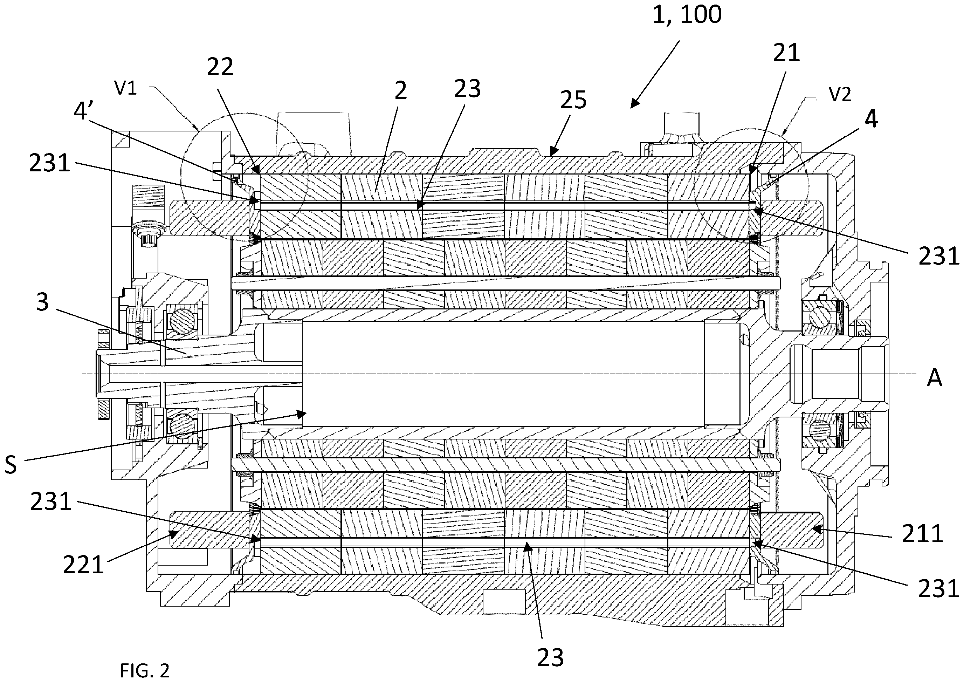

**FIG. 2** is an exemplary stator assembly 1 and electric machine 100 in a sectional view according to an example. The section is extending along a center axis A of the stator assembly 1 and the electric machine 100. The center axis A corresponds to a rotational axis of the electric machine 100. For example, the electric machine 100 in FIG. 2 may be the electric machine 100 in FIG. 1.

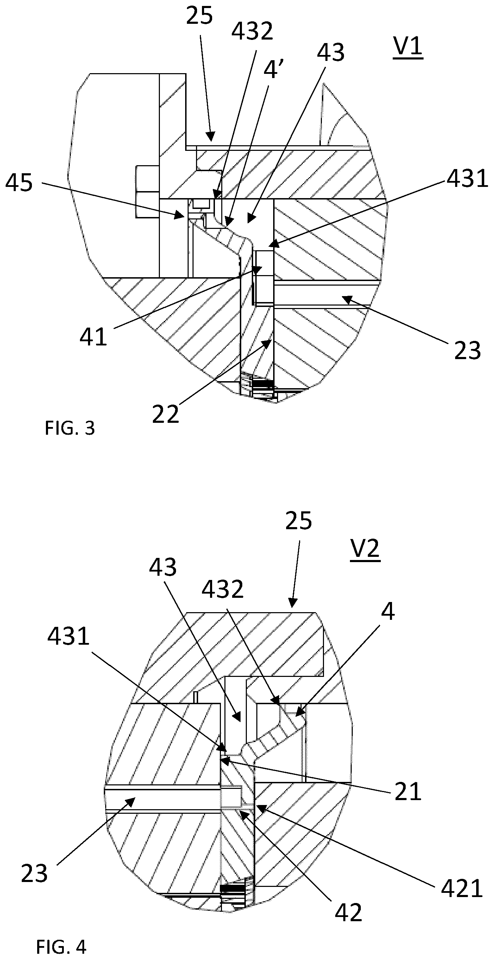

**FIG. 3** is the stator assembly 1 and electric machine 100 of FIG. 2 in an enlarged sectional view, i.e., the view V1 shown in FIG. 2.

**FIG. 4** is the stator assembly 1 and electric machine 100 of FIG. 2 in another enlarged sectional view, i.e., the view V2 shown in FIG. 2.

With reference to e.g., FIGS. 2, 3 and 4, the stator assembly 1 comprises a stator 2 which extends between two end portions 21, 22 along the center axis A of the stator assembly 1. The stator 2 comprises:
- a plurality of coolant fluid channels 23 integrated in the stator 2, distributed in a circumferential direction around the stator 2 and extending between the two end portions 21, 22 with openings 231 at each end portion 21, 22. As shown, the plurality of coolant fluid channels 23 may extend along the center axis A, e.g. in parallel with the center axis A.

The electric machine 100 further comprises a rotor 3. In this example, the rotor 3 is located in a hollow space S inside the stator 2. It shall however be noted that also an inverted configuration is possible where the stator is located radially inside the rotor. The stator 2 also comprises windings 211, 221 and/or hairpin windings (not shown) at the two end portions 21, 22.

The stator assembly 1 further comprises a first coolant fluid distribution ring element 4 provided at one of the end portions 21. As shown in e.g. FIG. 2, the stator assembly 1 may further comprise a second coolant fluid distribution ring element 4' provided at the other end portion 22. The first coolant fluid distribution ring element 4 is as shown preferably provided adjacent the end portion 21, and the second coolant fluid distribution ring element 4' is as shown preferably provided adjacent the end other portion 22, such as arranged in abutment and/or in contact with the respective end portion 21, 22.

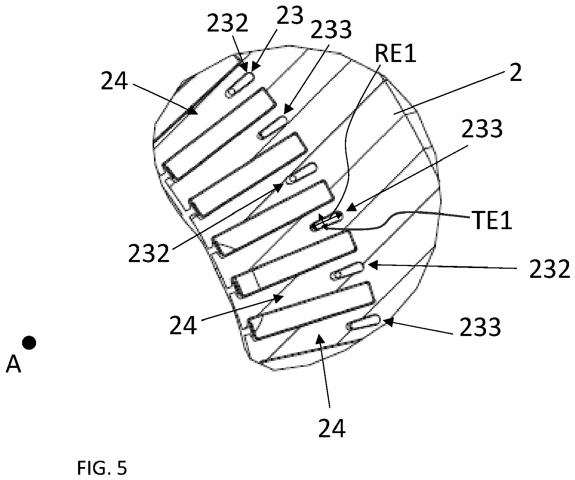

**FIG. 5** is an exemplary stator 2 in a sectional view according to an example. The sectional view represents a section of the stator 2 which is perpendicular to the center axis A. The stator 2 may for example be the stator shown in FIGS. 2-4. The plurality of coolant fluid channels 23 are depicted in FIG. 5, distributed in the circumferential direction around the stator 2. It shall be noted that there may typically be coolant fluid channels 23 all around the circumference, such as distributed evenly in the circumference of the stator 2.

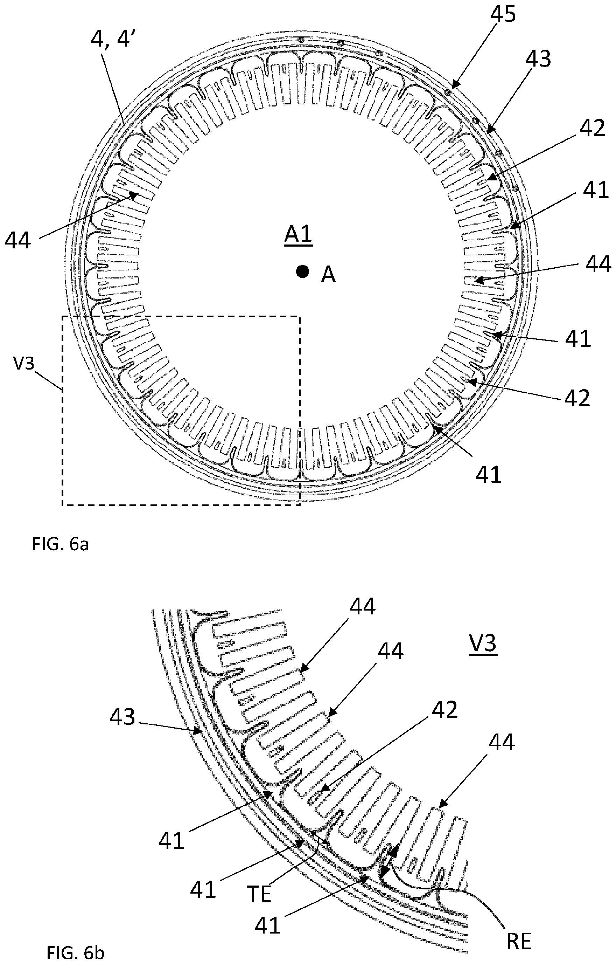

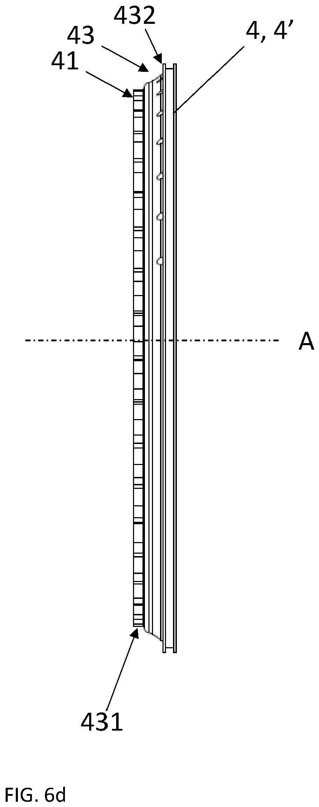

**FIGS. 6a****-d** are an exemplary coolant fluid distribution ring element 4, 4' in perspective views according to an example. For example, the coolant fluid distribution ring element 4, 4' shown in FIGS. 6a-d may correspond to the first 4 and/or second 4' coolant fluid distribution ring elements shown in FIG. 2. FIG. 6b shows an enlarged view V3 as shown in FIG. 6a.

The first coolant fluid distribution ring element 4 comprises a first set of cavities 41 distributed in a circumferential direction around the first coolant fluid distribution ring element 4, wherein each cavity of the first set of cavities 41 is fluidly connected to a respective coolant fluid channel 232 (see e.g. FIG. 5) of a first set of the plurality of coolant fluid channels 23. The first coolant fluid distribution ring element 4 further comprises a first set of through holes 42 distributed in the circumferential direction around the first coolant fluid distribution ring element 4 and extending therethrough in a direction along the center axis A, wherein each through hole of the first set of through holes 42 is fluidly connected to a respective coolant fluid channel 233 of a second set of the plurality of coolant fluid channels 23. In addition, the first coolant fluid distribution ring element 4 further comprises a first ring element fluid channel 43 which extends in the circumferential direction around the first coolant fluid distribution ring element 4, wherein the first ring element fluid channel 43 is fluidly connected to each cavity of the first set of cavities 41 and fluidly separated from each through hole of the first set of through holes 42.

By fluidly separated may herein at least mean that coolant fluid in the first ring element fluid channel 43 is prevented from entering each through hole of the first set of through holes 42 from a first axial side A1 of the first coolant fluid distribution ring element which is facing the stator.

Preferably, the stator assembly 1 is configured to provide coolant fluid to the first ring element fluid channel 43 so that coolant fluid is distributed into each cavity of the first set of cavities 41, and therefrom provided to a respective coolant fluid channel 232 of the first set of the plurality of coolant fluid channels 23. The stator assembly 1 is also preferably configured so that each through hole of the first set of through holes 42 receives coolant fluid from a respective coolant fluid channel 233 of the second set of the plurality of coolant fluid channels 23, and thereafter coolant fluid exits the through hole 42.

As depicted in e.g. FIG. 5, every second coolant fluid channel of the plurality of coolant fluid channels 23 may be a coolant fluid channel 232 of the first set of the plurality of coolant fluid channels and every other coolant fluid channel 233 of the plurality of coolant fluid channels 23 may be a coolant fluid channel of the second set of the plurality of coolant fluid channels. Other configurations are of course also possible, as e.g. mentioned in the above.

As shown in FIG. 5, the stator 2 may comprise a plurality of stator teeth 24, distributed in a circumferential direction around the stator 2 and protruding in a radial direction towards or away from (not shown) the center axis A, wherein at least one coolant fluid channel 232, 233 of the plurality of coolant fluid channels 23 is at least partly located in a stator tooth 24 of the plurality of stator teeth 24.

With reference to FIGS. 6a-c, the first coolant fluid distribution ring element 4 may comprise a plurality of tooth portions 44 distributed in a circumferential direction around the first coolant fluid distribution ring element 4 and protruding in a radial direction towards or away from (not shown) the center axis A. As shown, at least one cavity of the first set of cavities 41 and/or at least one through hole of the first set of through holes 42 may at least partly be located in a tooth portion of the plurality of tooth portions 44. As further shown, at least one cavity of the first set of cavities 41 may have a maximum radial extension RE in a radial direction from the first ring element fluid channel 43 towards or away from the center axis A and a maximum tangential extension TE in a tangential direction, wherein the maximum radial extension RE in the radial direction is longer than the maximum tangential extension TE in the tangential direction. In the shown example, each one of the first set of cavities 41 has an oblong profile, as seen in a plane which is perpendicular to the center axis A.

With reference to FIG. 5, at least one coolant fluid channel of the plurality of coolant fluid channels 23 may in a similar manner have a maximum radial extension RE1 in a radial direction and a maximum tangential extension TE1 in a tangential direction, wherein the maximum radial extension RE1 in the radial direction is longer than the maximum tangential extension TE1 in the tangential direction.

As shown in FIGS. 6a-b, at least one through hole of the first set of through holes 42, on a first axial side A1 of the first coolant fluid distribution ring element 4 which is facing the stator 2, may have a maximum radial extension in a radial direction and a maximum tangential extension in a tangential direction, wherein the maximum radial extension in the radial direction is longer than the maximum tangential extension in the tangential direction.

By the aforementioned configurations, the at least one cavity of the first set of cavities 41 and/or the at least one through hole of the first set of through holes 42 may better conform with the configuration of the at least one coolant fluid channel of the plurality of coolant fluid channels 23 shown in FIG. 5.

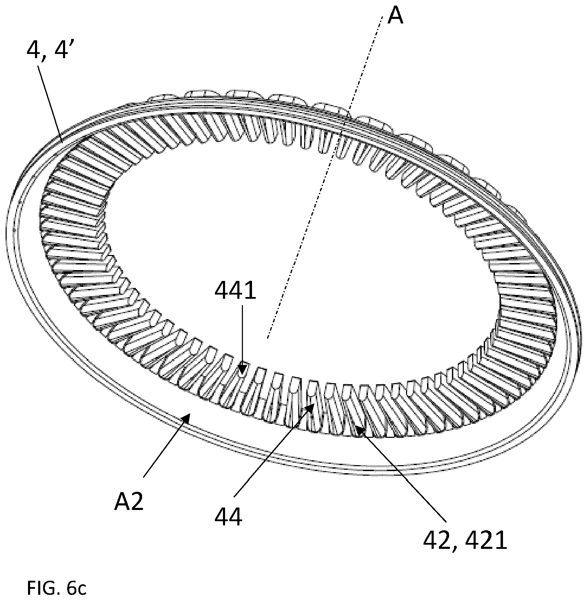

With reference to FIG. 6c, the at least one through hole of the first set of through holes 42, on a second axial side A2 of the first coolant fluid distribution ring element 4 which is facing away from the stator 2, may as shown have an opening 421 with an area size which is smaller than an area size of the at least one through hole on the first axial side A1. Thereby, an improved nozzle effect may be achieved. For example, the opening 421 on the second axial side A2 of the at least one through hole may be circular. Coolant fluid may thus preferably exit the opening 421. In some examples, the first coolant fluid distribution ring element 4 may be arranged so that coolant fluid exits the opening 421 and makes contact with portions of stator windings (not shown) provided outside the stator 2.

With reference to e.g., FIGS. 2, 4 and 6a-b, the first ring element fluid channel 43 may as shown be fluidly separated from each through hole of the first set of through holes 42 by a cylindrically shaped wall 431 and/or a radially extending disc-shaped wall 432 of the first coolant fluid distribution ring element 4. As further shown, the first ring element fluid channel 43 may be provided at a radially outwardly facing portion of the first coolant fluid distribution ring element 4. Alternatively, not shown, the first ring element fluid channel may be provided at a radially inwardly facing portion of the first coolant fluid distribution ring element. This configuration may be applicable when the stator is located radially inside the rotor.

The first coolant fluid distribution ring element 4 may be made of a polymer material or a non-magnetic metallic material.

For example, the stator assembly 1 may comprise at least one hairpin winding 5 provided proximate a tooth portion 44 of the plurality of tooth portions 44.

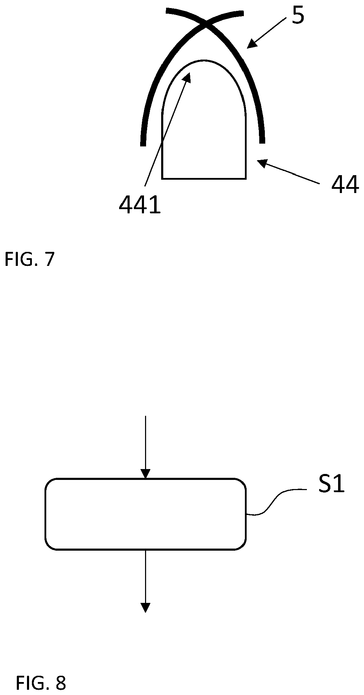

**FIG. 7** is an exemplary tooth portion 44 in a schematic view according to an example. The view is a section of a tooth portion 44 which is perpendicular to the radial direction of the stator assembly 1, corresponding to a radial direction of the tooth portion 44. At least one tooth portion 44 of the plurality of tooth portions 44 may as shown have a curved profile 441, with a constant or varying radius, as seen in a sectional plane of the tooth portion 44 which is perpendicular to the radial direction of the tooth portion.

As shown in FIG. 7, the at least one hairpin winding 5 is provided proximate the curved profile 441 such that it follows the curved profile 441, as seen in the sectional plane of the tooth portion 44 which is perpendicular to the radial direction of the tooth portion. Accordingly, the at least one hairpin winding 5 may have a section with a corresponding radius which is similar to the radius of the curved profile, or at least within a tolerance range of the curved profile's radius, e.g., ± 20 % or ± 10 % of the curved profile's radius. The at least one hairpin winding 5 may be bent around the curved profile 441, i.e., the tooth portion 44 may be used as a tool for forming the at least one hairpin winding 5, thereby achieving a similar or close to similar radius.

The stator assembly 1 may as mentioned in the above also comprise a second coolant fluid distribution ring element 4', as shown in FIG. 2 and 3, and in FIGS. 6a-d. The second coolant fluid distribution ring element 4' may be provided at the other one of the end portions 22. and may comprise a second set of cavities 41 distributed in a circumferential direction around the second coolant fluid distribution ring element 4'. Each cavity of the second set of cavities 41 is fluidly connected to a respective coolant fluid channel 233 of the second set of the plurality of coolant fluid channels. The second coolant fluid distribution ring element 4' further comprises a second set of through holes 42 distributed in the circumferential direction around the second coolant fluid distribution ring element 4' and extending therethrough in a direction along the center axis A, wherein each through hole of the second set of through holes 42 is fluidly connected to a respective coolant fluid channel 232 of the first set of the plurality of coolant fluid channels. The second coolant fluid distribution ring element 4' further comprises a second ring element fluid channel 43 which extends in the circumferential direction around the second coolant fluid distribution ring element 4', wherein the second ring element fluid channel 43 is fluidly connected to each cavity of the second set of cavities 41 and fluidly separated from each through hole of the second set of through holes 42. The second coolant fluid distribution ring element 4' may be similar to or identical with the first coolant fluid distribution ring element 4.

Preferably, the stator assembly 1 is configured to provide coolant fluid to the second ring element fluid channel 43 so that coolant fluid is distributed into each cavity of the second set of cavities 41, and therefrom provided to a respective coolant fluid channel 233 of the second set of the plurality of coolant fluid channels 23. The stator assembly 1 is also preferably configured so that each through hole of the second set of through holes 42 receives coolant fluid from a respective coolant fluid channel 232 of the first set of the plurality of coolant fluid channels 23, and thereafter coolant fluid exits the through hole 42.

Even though two coolant fluid distribution ring elements 4, 4' are shown in FIG. 2, it shall be noted that in some examples there is only one coolant fluid distribution ring element on one of the end portions of the stator. In such example, coolant fluid may only enter and exit the stator at the end portion where the coolant fluid distribution ring element is provided.

With reference to e.g. FIGS. 2, 3 and 4, the first or second ring element fluid channel 43 may further be defined by another portion of the stator 2 and/or another element, such as by an outer ring element 25, or by an inner ring element (not shown).

As shown in e.g. FIGS. 3 and 6a, the first and/or second coolant fluid distribution ring element 4, 4' may further comprise at least one additional through hole 45 which is fluidly connected to the first and/or second ring element fluid channel 43 such that coolant fluid can flow from the first and/or second ring element fluid channel 43 to the second axial side A2. Thereby, coolant fluid can flow out on the second axial side A2 from the first and/or second ring element fluid channel 43 and cool portions of windings located outside the stator. In the shown example, there are eight additional through holes 45. However, there may be fewer or more such through holes. The additional through holes 45 are preferably located above the center axis A. Thereby, coolant fluid will, due to gravitational forces, fall down towards the portions of the windings.

The first and/or second coolant fluid distribution ring element 4, 4' may be manufactured by e.g. injection molding. **FIG. 8** depicts a flowchart of a method for manufacturing a coolant fluid distribution ring element 4, 4'according to examples disclosed herein. The method comprises:
S 1: injection molding the coolant fluid distribution ring element 4, 4'.

The method may comprise additional actions performed before and/or after action S1.

In the following, possible features and feature combinations of the present disclosure are presented as a list of Examples:
Example 1: A stator assembly (1) for an electric machine (100), the stator assembly (1) comprises a stator (2) which extends between two end portions (21, 22) along a center axis (A) of the stator assembly (1), corresponding to a rotational axis of the electric machine (100), the stator (2) comprising:
   - a plurality of coolant fluid channels (23) integrated in the stator (2), distributed in a circumferential direction around the stator (2) and extending between the two end portions (21, 22) with openings (231) at each end portion (21, 22), the stator assembly (1) further comprising:
   - a first coolant fluid distribution ring element (4) provided at one of the end portions (21), wherein the first coolant fluid distribution ring element (4) comprises a first set of cavities (41) distributed in a circumferential direction around the first coolant fluid distribution ring element (4), wherein each cavity of the first set of cavities (41) is fluidly connected to a respective coolant fluid channel (232) of a first set of the plurality of coolant fluid channels (23), wherein the first coolant fluid distribution ring element (4) further comprises a first set of through holes (42) distributed in the circumferential direction around the first coolant fluid distribution ring element (4) and extending therethrough in a direction along the center axis (A), wherein each through hole of the first set of through holes (42) is fluidly connected to a respective coolant fluid channel (233) of a second set of the plurality of coolant fluid channels (23), and wherein the first coolant fluid distribution ring element (4) further comprises a first ring element fluid channel (43) which extends in the circumferential direction around the first coolant fluid distribution ring element (4), wherein the first ring element fluid channel (43) is fluidly connected to each cavity of the first set of cavities (41) and fluidly separated from each through hole of the first set of through holes (42).
Example 2: The stator assembly (1) according to example 1, wherein the stator (2) comprises a plurality of stator teeth (24), distributed in a circumferential direction around the stator (2) and protruding in a radial direction towards or away from the center axis (A), wherein at least one coolant fluid channel (232, 233) of the plurality of coolant fluid channels (23) is at least partly located in a stator tooth of the plurality of stator teeth (24).
Example 3: The stator assembly (1) according to any one of the preceding examples, wherein the first coolant fluid distribution ring element (4) comprises a plurality of tooth portions (44) distributed in a circumferential direction around the first coolant fluid distribution ring element (4) and protruding in a radial direction towards or away from the center axis (A).
Example 4: The stator assembly (1) according to example 3, wherein at least one cavity of the first set of cavities (41) and/or at least one through hole of the first set of through holes (42) are/is at least partly located in a tooth portion of the plurality of tooth portions (44).
Example 5: The stator assembly (1) according to any one of examples 3 or 4, wherein at least one tooth portion of the plurality of tooth portions (44) has a curved profile (441), as seen in a sectional plane of the tooth portion which is perpendicular to a radial direction of the tooth portion.
Example 6: The stator assembly (1) according to example 5, comprising at least one hairpin winding (5) provided proximate the curved profile (441) such that it follows the curved profile (441), as seen in the sectional plane of the tooth portion which is perpendicular to the radial direction of the tooth portion.
Example 7: The stator assembly (1) according to any one of the preceding examples, wherein every second coolant fluid channel of the plurality of coolant fluid channels is a coolant fluid channel (232) of the first set of the plurality of coolant fluid channels and wherein every other coolant fluid channel (233) of the plurality of coolant fluid channels is a coolant fluid channel of the second set of the plurality of coolant fluid channels.
Example 8: The stator assembly (1) according to any one of the preceding examples, wherein at least one cavity of the first set of cavities (41) has a maximum radial extension (RE) in a radial direction from the first ring element fluid channel (43) towards or away from the center axis (A) and a maximum tangential extension (TE) in a tangential direction, wherein the maximum radial extension in the radial direction is longer than the maximum tangential extension in the tangential direction.
Example 9: The stator assembly (1) according to any one of the preceding examples, wherein at least one coolant fluid channel of the plurality of coolant fluid channels (23) has a maximum radial extension (RE1) in a radial direction and a maximum tangential extension (TE1) in a tangential direction, wherein the maximum radial extension in the radial direction is longer than the maximum tangential extension in the tangential direction.
Example 10: The stator assembly (1) according to any one of the preceding examples, wherein at least one through hole of the first set of through holes (42), on a first axial side (A1) of the first coolant fluid distribution ring element (4) which is facing the stator (2), has a maximum radial extension in a radial direction and a maximum tangential extension in a tangential direction, wherein the maximum radial extension in the radial direction is longer than the maximum tangential extension in the tangential direction.
Example 11: The stator assembly (1) according to example 10, wherein the at least one through hole of the first set of through holes (42), on a second axial side (A2) of the first coolant fluid distribution ring element (4) which is facing away from the stator (2), has an opening (421) with an area size which is smaller than an area size of the at least one through hole on the first axial side (A1).
Example 12: The stator assembly (1) according to example 11, wherein the opening (421) on the second axial side (A2) of the at least one through hole is circular.
Example 13: The stator assembly (1) according to any one of the preceding examples, wherein the first ring element fluid channel (43) is fluidly separated from each through hole of the first set of through holes (42) by a cylindrically shaped wall (431) and/or a radially extending disc-shaped wall (432) of the first coolant fluid distribution ring element (4).
Example 14: The stator assembly (1) according to any one of the preceding examples, wherein the first ring element fluid channel (43) is provided at a radially outwardly facing portion of the first coolant fluid distribution ring element (4) or at a radially inwardly facing portion of the first coolant fluid distribution ring element.
Example 15: The stator assembly (1) according to any one of the preceding examples, wherein the first coolant fluid distribution ring element (4) is made of a polymer material or a non-magnetic metallic material.
Example 16: The stator assembly (1) according to any one of the preceding examples, further comprising:
   - a second coolant fluid distribution ring element (4') provided at the other one of the end portions (22), wherein the second coolant fluid distribution ring element (4') comprises a second set of cavities (41) distributed in a circumferential direction around the second coolant fluid distribution ring element (4'), wherein each cavity of the second set of cavities (41) is fluidly connected to a respective coolant fluid channel (233) of the second set of the plurality of coolant fluid channels, wherein the second coolant fluid distribution ring element (4') further comprises a second set of through holes (42) distributed in the circumferential direction around the second coolant fluid distribution ring element (4') and extending therethrough in a direction along the center axis (A), wherein each through hole of the second set of through holes (42) is fluidly connected to a respective coolant fluid channel (232) of the first set of the plurality of coolant fluid channels, and wherein the second coolant fluid distribution ring element (4') further comprises a second ring element fluid channel (43) which extends in the circumferential direction around the second coolant fluid distribution ring element (4'), wherein the second ring element fluid channel (43) is fluidly connected to each cavity of the second set of cavities (41) and fluidly separated from each through hole of the second set of through holes (42).
Example 17: A coolant fluid distribution ring element (4, 4') for a stator (2) of an electric machine (100), wherein the coolant fluid distribution ring element (4, 4') comprises a first set of cavities (41) distributed in a circumferential direction around the first coolant fluid distribution ring element (4, 4'), wherein each cavity of the first set of cavities (41) is arranged to be fluidly connected to a respective coolant fluid channel of a first set of a plurality of coolant fluid channels (23) of the stator (2), wherein the first coolant fluid distribution ring element (4, 4') further comprises a first set of through holes (42) distributed in the circumferential direction around the first coolant fluid distribution ring element (4, 4') and extending therethrough in a direction along a center axis (A) thereof, wherein each through hole of the first set of through holes (42) is arranged to be fluidly connected to a respective coolant fluid channel of a second set of the plurality of coolant fluid channels (233) of the stator (2), and wherein the first coolant fluid distribution ring element (4, 4') further comprises a first ring element fluid channel (43) which extends in the circumferential direction around the first coolant fluid distribution ring element (4, 4'), wherein the first ring element fluid channel (43) is fluidly connected to each cavity of the first set of cavities (41) and fluidly separated from each through hole of the first set of through holes (42).
Example 18: A method for manufacturing a coolant fluid distribution ring element (4, 4') for a stator (2) according to any one of the preceding examples, the method comprising:
   - injection molding the coolant fluid distribution ring element (4, 4').
Example 19: An electric machine (100) comprising a stator assembly (1) according to any one of examples 1-16 and a rotor (3) which is arranged to rotate about the center axis (A).
Example 20: A vehicle (200) comprising a stator assembly (1) according to any one of examples 1-16, a coolant fluid distribution ring element (4, 4') according to example 17, and/or an electric machine (100) according to example 19.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A stator assembly (1) for an electric machine (100), the stator assembly (1) comprises a stator (2) which extends between two end portions (21, 22) along a center axis (A) of the stator assembly (1), corresponding to a rotational axis of the electric machine (100), the stator (2) comprising:
- a plurality of coolant fluid channels (23) integrated in the stator (2), distributed in a circumferential direction around the stator (2) and extending between the two end portions (21, 22) with openings (231) at each end portion (21, 22), the stator assembly (1) further comprising:
- a first coolant fluid distribution ring element (4) provided at one of the end portions (21), wherein the first coolant fluid distribution ring element (4) comprises a first set of cavities (41) distributed in a circumferential direction around the first coolant fluid distribution ring element (4), wherein each cavity of the first set of cavities (41) is fluidly connected to a respective coolant fluid channel (232) of a first set of the plurality of coolant fluid channels (23), wherein the first coolant fluid distribution ring element (4) further comprises a first set of through holes (42) distributed in the circumferential direction around the first coolant fluid distribution ring element (4) and extending therethrough in a direction along the center axis (A), wherein each through hole of the first set of through holes (42) is fluidly connected to a respective coolant fluid channel (233) of a second set of the plurality of coolant fluid channels (23), and wherein the first coolant fluid distribution ring element (4) further comprises a first ring element fluid channel (43) which extends in the circumferential direction around the first coolant fluid distribution ring element (4), wherein the first ring element fluid channel (43) is fluidly connected to each cavity of the first set of cavities (41) and fluidly separated from each through hole of the first set of through holes (42).

2. The stator assembly (1) according to claim 1, wherein the stator (2) comprises a plurality of stator teeth (24), distributed in a circumferential direction around the stator (2) and protruding in a radial direction towards or away from the center axis (A), wherein at least one coolant fluid channel (232, 233) of the plurality of coolant fluid channels (23) is at least partly located in a stator tooth of the plurality of stator teeth (24).

3. The stator assembly (1) according to any one of the preceding claims, wherein the first coolant fluid distribution ring element (4) comprises a plurality of tooth portions (44) distributed in a circumferential direction around the first coolant fluid distribution ring element (4) and protruding in a radial direction towards or away from the center axis (A).

4. The stator assembly (1) according to claim 3, wherein at least one cavity of the first set of cavities (41) and/or at least one through hole of the first set of through holes (42) are/is at least partly located in a tooth portion of the plurality of tooth portions (44).

5. The stator assembly (1) according to any one of claims 3 or 4, wherein at least one tooth portion of the plurality of tooth portions (44) has a curved profile (441), as seen in a sectional plane of the tooth portion which is perpendicular to a radial direction of the tooth portion.

6. The stator assembly (1) according to claim 5, comprising at least one hairpin winding (5) provided proximate the curved profile (441) such that it follows the curved profile (441), as seen in the sectional plane of the tooth portion which is perpendicular to the radial direction of the tooth portion.

7. The stator assembly (1) according to any one of the preceding claims, wherein every second coolant fluid channel of the plurality of coolant fluid channels is a coolant fluid channel (232) of the first set of the plurality of coolant fluid channels and wherein every other coolant fluid channel (233) of the plurality of coolant fluid channels is a coolant fluid channel of the second set of the plurality of coolant fluid channels.

8. The stator assembly (1) according to any one of the preceding claims, wherein at least one cavity of the first set of cavities (41) has a maximum radial extension (RE) in a radial direction from the first ring element fluid channel (43) towards or away from the center axis (A) and a maximum tangential extension (TE) in a tangential direction, wherein the maximum radial extension in the radial direction is longer than the maximum tangential extension in the tangential direction.

9. The stator assembly (1) according to any one of the preceding claims, wherein at least one through hole of the first set of through holes (42), on a first axial side (A1) of the first coolant fluid distribution ring element (4) which is facing the stator (2), has a maximum radial extension in a radial direction and a maximum tangential extension in a tangential direction, wherein the maximum radial extension in the radial direction is longer than the maximum tangential extension in the tangential direction.

10. The stator assembly (1) according to claim 9, wherein the at least one through hole of the first set of through holes (42), on a second axial side (A2) of the first coolant fluid distribution ring element (4) which is facing away from the stator (2), has an opening (421) with an area size which is smaller than an area size of the at least one through hole on the first axial side (A1).

11. The stator assembly (1) according to any one of the preceding claims, wherein the first ring element fluid channel (43) is fluidly separated from each through hole of the first set of through holes (42) by a cylindrically shaped wall (431) and/or a radially extending disc-shaped wall (432) of the first coolant fluid distribution ring element (4).

12. The stator assembly (1) according to any one of the preceding claims, further comprising:
- a second coolant fluid distribution ring element (4') provided at the other one of the end portions (22), wherein the second coolant fluid distribution ring element (4') comprises a second set of cavities (41) distributed in a circumferential direction around the second coolant fluid distribution ring element (4'), wherein each cavity of the second set of cavities (41) is fluidly connected to a respective coolant fluid channel (233) of the second set of the plurality of coolant fluid channels, wherein the second coolant fluid distribution ring element (4') further comprises a second set of through holes (42) distributed in the circumferential direction around the second coolant fluid distribution ring element (4') and extending therethrough in a direction along the center axis (A), wherein each through hole of the second set of through holes (42) is fluidly connected to a respective coolant fluid channel (232) of the first set of the plurality of coolant fluid channels, and wherein the second coolant fluid distribution ring element (4') further comprises a second ring element fluid channel (43) which extends in the circumferential direction around the second coolant fluid distribution ring element (4'), wherein the second ring element fluid channel (43) is fluidly connected to each cavity of the second set of cavities (41) and fluidly separated from each through hole of the second set of through holes (42).

13. A coolant fluid distribution ring element (4, 4') for a stator (2) of an electric machine (100), wherein the coolant fluid distribution ring element (4, 4') comprises a first set of cavities (41) distributed in a circumferential direction around the first coolant fluid distribution ring element (4, 4'), wherein each cavity of the first set of cavities (41) is arranged to be fluidly connected to a respective coolant fluid channel of a first set of a plurality of coolant fluid channels (23) of the stator (2), wherein the first coolant fluid distribution ring element (4, 4') further comprises a first set of through holes (42) distributed in the circumferential direction around the first coolant fluid distribution ring element (4, 4') and extending therethrough in a direction along a center axis (A) thereof, wherein each through hole of the first set of through holes (42) is arranged to be fluidly connected to a respective coolant fluid channel of a second set of the plurality of coolant fluid channels (233) of the stator (2), and wherein the first coolant fluid distribution ring element (4, 4') further comprises a first ring element fluid channel (43) which extends in the circumferential direction around the first coolant fluid distribution ring element (4, 4'), wherein the first ring element fluid channel (43) is fluidly connected to each cavity of the first set of cavities (41) and fluidly separated from each through hole of the first set of through holes (42).

14. An electric machine (100) comprising a stator assembly (1) according to any one of claims 1-12 and a rotor (3) which is arranged to rotate about the center axis (A).

15. A vehicle (200) comprising a stator assembly (1) according to any one of claims 1-12, a coolant fluid distribution ring element (4, 4') according to claim 13, and/or an electric machine (100) according to claim 14.
